# EUROPEAN PATENT APPLICATION

(11) **EP 3 413 192 A1**
(43) Date of publication of application: **12.12.2018**
(21) Application number: 17174992.2
(22) Date of filing: 08.06.2017
(51) Int. Cl.: G06F 9/44, G06F 9/45, H04L 29/06

(54) **INTERNET-BASED COMMUNICATION SYSTEM**

(71) Applicant: HOB GmbH & Co. KG, 90556 Cadolzburg (DE)
(72) Inventor: Martin, Stefan, 99610 Tunzenhausen (DE)
(74) Representative: Hübner, Gerd

(57) **Abstract**

An Internet-based communication system includes
- at least one user computer (1) running a web browser(2) and web applications (11),
- a web server(4) located in an internal enterprise network (6),
- an encrypting VPN gateway (3) connectable to the user computer (1) via the public Internet (9) and to the web server(4) via the internal enterprise network(6), said encrypting VPN gateway(3) running an integrated web portal server (5), which is adapted to be addressed by the web browser(2) providing links to webpages and web applications located on the web server (4),
- wherein a JavaScript (=JS) proxy layer module (10) is implemented in the user computer (1) between the web browser(2) and web application (11) and downloaded from the VPN gateway (3) by the web browser (2),
- wherein the JS proxy layer module (10) defines a proxy functionality, the functions of which are executed in a JS engine of the web browser (2) and include analyzing and - if necessary - changing JS code of any web application (11) which is also downloaded from the VPN gateway (3) but originates from web servers not located in the internal enterprise network (6).

## Description

### Field of the Invention

The invention refers to an Internet-based communication system including at least one user computer running a web browser and web applications, a web server located in an internal enterprise network, an encrypting VPN gateway connectable to the user computer via the public Internet and to the web server via the internal enterprise network, said encrypting VPN gateway running an integrated web portal server, which is adapted to be addressed by the web browser providing links to webpages and web applications located on the web server.

### Background Art

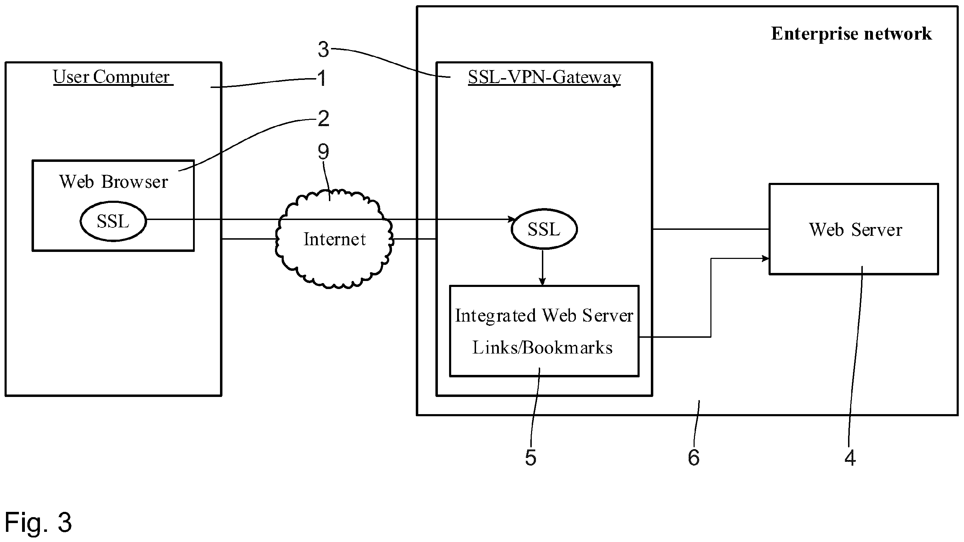

The general known scenario, in which the present invention is applied, can best be explained in context with Fig. 3. It covers a user computer 1, running a web browser 2, a SSL-VPN-gateway 3, and at least one web server 4, providing webpages and applications.

The SSL-VPN-gateway 3 runs an integrated web server 5, also called portal server 5, which is addressed by the user's web browser 2, providing links to the webpages and applications, which are not located on this same machine, but on the previously mentioned web server 4 running inside the enterprise network 6, which provides the web pages and applications, as shown in Fig. 3.

For security reason, the connection between the web browser 2, running on the user computer 1, via the public internet 9 and the SSL-VPN-gateway 3 is authenticated, encrypted and secured be means of the SSL/TLS technology. The transferred data is mainly covered by the HTTP protocol, which is called HTTPS here, because of the applied SSL/TLS security layer.

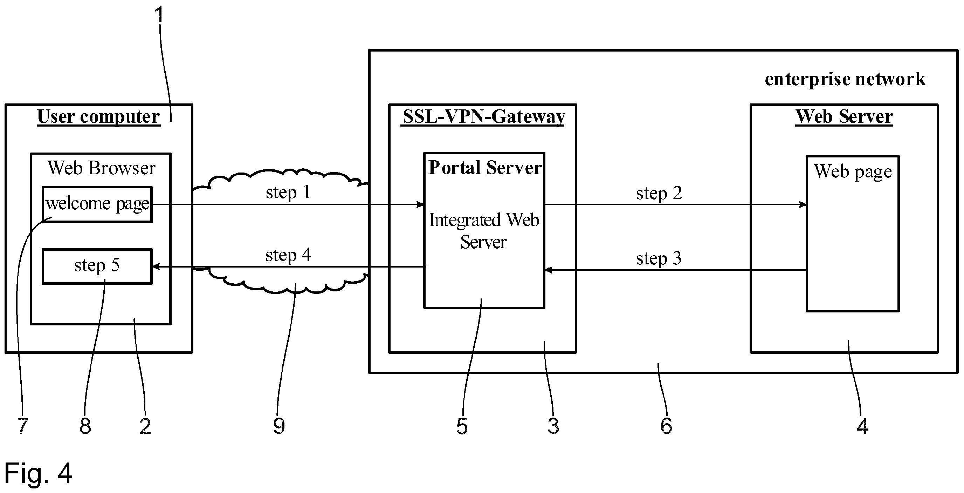

As shown in Fig. 4, a user working with the web browser 2 running on the user computer 1, being connected (step 1) to the portal server 5 of the SSL-VPN-gateway 3, first gets the welcome page 7 displayed, downloaded from the integrated web server 5. When the user clicks on a link on this welcome page 7, this portal server 5 itself connects (step 2) to the web server 4 in the enterprise network 6 to request the data of the addressed web page, which sends this data back (step 3) to the portal server 5, which forwards (step 4) this data to the user's web browser 2, so that the user gets the web page content from the web server 4 shown on his web browser's window 8 (step 5).

This web page may contain another link to another web page, probably located on another web server (not shown). Now when the user clicks on this mentioned link, the web browser 2 will try to connect directly to the web server (not shown) being addressed in this link. This connection may work, but it will most probably not go through the SSL-VPN-gateway 3. It may be set up directly between the web browser 2 and this web server (not shown), not using the security enhancement of the SSL-VPN-gateway 3. This would be identified as a security risk. Most often this connection will not work, because the enterprise internal web servers are protected by a firewall, and would not be accessible from public internet 9.

It is an important security requirement and the main task of the portal server 5 of a SSL-VPN-gateway 3 to ensure that all connections following the links on its integrated web server 5 are going through that SSL-VPN-gateway 3, to be SSL/TLS secured. In a state of the art technology, this requirement is met by changing the link addresses in the HTTP, HTML, CSS and JavaScript components of a web site to a new extended link, which addresses the SSL-VPN-gateway 3 forehand, while additionally giving information about the target web server and web page behind the SSL-VPN-gateway 3. This information is given as part of the URL path.

Web pages, which are sent by a web server to a web browser, may include different types of file formats. The protocol is always HTTP/HTTPS (Hypertext Transfer Protocol, RFC 2616), delivering the content, which may be HTML (Hypertext Markup Language), CSS (Cascading Style Sheet) or JavaScript, to mention only the most important types.

In the case that a JavaScript program is included in the data, sent by a web server to the web browser, these JavaScript programs can also manage links to web server. The JavaScript code is executed inside the web browser of the user. As with the links, for security reason it is desired that these links, managed by the JavaScript programs, need to address the SSL-VPN-gateway 3 forehand. JavaScript code, executed in the web browser 2, can also create or alter links in web pages, and JavaScript code itself can start a connection to a web server. All this requires changes of the related parts of the JavaScript code, accordingly.

State of the art techniques solve the described problems by scanning the data of the different web file types, sent by a web server, inside the SSL-VPN-gateway 3, and changing HTML links and JavaScript programs accordingly, before sending the data to the user's web browser, as shown in Fig. 4. This is a well-known technique for HTML content, which is also used by the Open-Source Apache software project, which includes functions like "mod_proxy" and "mod_proxy_html" to do this so-called HTML-rewriting.

In these state of the art solutions, the portal servers 5 of SSL-VPN-gateways 3, working between the user's web browser 2 and the web server (like web Server 4), somehow are altering links in HTML pages and JavaScript programs, which are downloaded. Doing so, it is managed that all hyperlinks on web pages, which are loaded by the user's web browser 2, are changed to pass through the SSL-VPN-gateway 3. The JavaScript code executing in the users web browser 2 still needs to work the same way if it is loaded directly, compared to when it is loaded through the SSL-VPN-gateway 3. This means that the content, stored in variables, need to be the same in both situations, from the perspective of the web application. This can be done, for example, in replacing certain variable names and function names by calls to functions, which are located in extra JavaScript code injected by the SSL-VPN-gateway 3. These extra functions are then doing the above described changes.

Because of the definition of the JavaScript programming language, which is dynamically typed, the following problem arises: The name of a public browser interface (as defined by the HTML standards document) object may be used in different ways. An example is the browser interface method of name 'open'. Of importance is the context when the name 'open' is used. This forces the need to always check the type of an object, which provides a property, typically by "instanceof". The disadvantage is that a lot of checks of objects of other types is needed, which is done at execution time. This may slow down the execution of the JavaScript code in the web browser 2, which is not desired.
- Example:: a.open("www.example.com") will be changed by state of the art methods to
ProxyLayer_open(a, "www.example.com"),
where 'ProxyLayer_open' must check if the object 'a' is of type "window".

Properties of an object can also be accessed by an array-operator. Here, an index value represents a string, containing the name of the property.
- Example 1:: a["open"]("www.example.com") will be changed by state of the art methods to ProxyLayer_open(a, "www.example.com").
- Example 2:: a[b]("www.example.com") will be changed by state of the art methods to ProxyLayer_array_call(a, b, "www.example.com").
Disadvantage: every single array access must be checked, while only some are relevant. The index value 'b' is dynamic and not known before runtime, so it cannot be identified during a static analysis, because it is calculated during runtime.

JavaScript code loaded by the browser is getting more and more complex. Analyzing this code in the described way gets more complicated, with increasing expense. This may even lead to incorrect behavior of modern web applications, when loaded via SSL portal VPN Gateway servers.

### Summary of the Invention

It is an object of the present invention to improve the Internet-based communication system according to the preamble of claim 1 to overcome the prior art problems discussed at, especially allowing a much more flexible manipulation of HTML content for the purpose of URL/Link rewriting inside the browser at the time when the JavaScript code of a web application is executed.

It is to be mentioned that at the time of writing this patent application JavaScript is the state of the art and most often used programming language for modern web applications. For that reason this invention is based on and describes the methods of the invention for JavaScript. In the near future this might change and another preferred web application programming language, like WebAssembly, might come up. The functionality of the proxy layer module of this invention, presently based on JavaScript, will then be applied on a new web application programming language.

Now the above-mentioned object is achieved by the characterizing features of claim 1, according to which a so-called JavaScript (=JS) proxy layer module is implemented in the user computer between the web browser and web application which proxy layer module is downloaded from the VPN gateway by the web browser, wherein the JS proxy layer module defines an object rebuilding proxy functionality, the functions of which are executed in a JS engine of the web browser and include analyzing and - if necessary - changing JS code of any web application which is also downloaded from the VPN gateway but originates from web servers not located on this same VPN gateway, but on other machines in the internal enterprise network.

The depending claims define preferred embodiments of the invention, which are reflected in the following, the effects and advantages of which preferred embodiments, however, are explained in context with the description of the preferred embodiment.

Accordingly in a first preferred embodiment the functions of the object rebuilding proxy functionality may be implemented by built in functions of the JS proxy layer module defined by ECMAScript5, ECMAScript6 or later. Using these built in functions it is possible to create the object rebuilding proxy functionality, implemented within the proxy layer module, in a way described later in context with the preferred embodiment. This has the advantage that the portal server of the SSL-VPN-gateway does not need to do all the complicated JavaScript rewriting. The SSL-VPN-gateway in most cases forwards all the data coming from the web server in the enterprise network to the web browser running on the user's computer. The portal server needs to do at least some modifications to the JavaScript code, because normally the browser would immediately start and run the JavaScript code when it is completely downloaded.

In a further preferred embodiment the proxy layer code for the JS proxy layer module is provided by a separate JavaScript module embedded in every presentable web page being part of the same shared origin web server of the encrypting VPN-gateway.

Moreover it is possible that the proxy layer module is adapted to cover original browser objects in a way to become inaccessible directly by a web application thus the web application is running on a shielded sandbox technique. Thus the proxy layer works as intermediate proxy, interceding between the web application and the browser, and vice versa.

In a preferred development of the mentioned sandbox technique the original browser objects become inaccessible directly by renaming all relevant references within the complete JavaScript environment predefined by the browser to provide standard API functions and properties.

For establishing the proxy layer functionality under the above-mentioned ECMAScript5, ECMAScript6 or later one of the following processing procedures may be applicable on original objects:
- P1: the property of an object stays unchanged;
- P2: an accessor descriptor (DESC2) consisting of a 'Getter' function (A1) and 'Setter' function (A2) is created to be able to get and set property values wherein the original object (OBJ) and the property name (NAME) being stored in a hidden context within the scope of the functions A1 and A2 in DESC2;
- P3: the type of the original object and the property name denotes a public browser API that requires a distinct handler for additional data manipulation; and
- P4: mainly in context with "arguments" objects these are set up by the JS engine during runtime and cannot be wrapped into proxy layer objects as being uncontrollable by the proxy layer module, wherein whenever an inner code function makes use of this "arguments" object, one of the following procedure (A or B) is applied:
   - A): the related property 'look up' and the related property 'set' of the relevant property "caller" are rewritten; or
   - B): a function call using the relevant property "caller" as substituted by a function of wrapper.

By preferably using at least one of aforesaid processing procedures the proxy layer module may be adapted to be run according to one of the following three methods:
- Method 1: an original browser object is completely wrapped into a proxy layer object no longer being directly accessible by the web application, wherein the processing procedure P2 is used;
- Method 2: an original browser object is only partly modified, but not wrapped into a proxy layer object, wherein
   = for non-relevant properties procedure P1 is applied,
   = for relevant properties, where values are not manipulated, procedure P2 is applied, and
   = for relevant properties, where values are manipulated, procedure P3 is applied;
- Method 3: if methods 1 and 2 cannot be applied an original browser object is neither wrapped nor modified, but a state of the art method is utilized, wherein
   = for not relevant properties procedure P1 is applied,
   = for relevant properties procedure P4A or P4B are applied.
- Method 4: For relevant properties in the global context an alternative entry point is generated. Relevant are all properties that are predefined by the browser environment. This new reference provides the same value as if the property would be read through the proxy-object of window.

Further features, characteristics and advantages of the invention can be derived from the following description of a preferred embodiment based on the drawings.

### Brief Description of the Drawings

- Fig. 1: is a block diagram of an Internet-based communication system according to the invention,
- Fig. 2: is a block diagram of the structure of the user computer used in the communication system according to Fig.1 including a flowchart reflecting functional data and instruction exchange steps,
- Fig. 3: is a block diagram of a prior art Internet-based communication system, and
- Fig. 4: is a flowchart of the functional data and instruction exchange steps taking place in the communication system according to Fig. 3.

### Description of the Preferred Embodiment¶

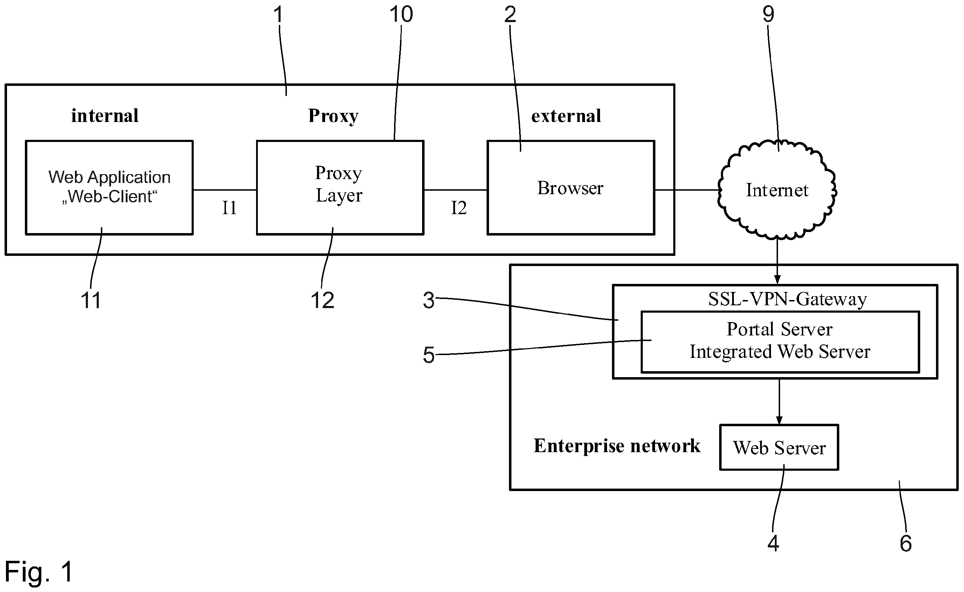

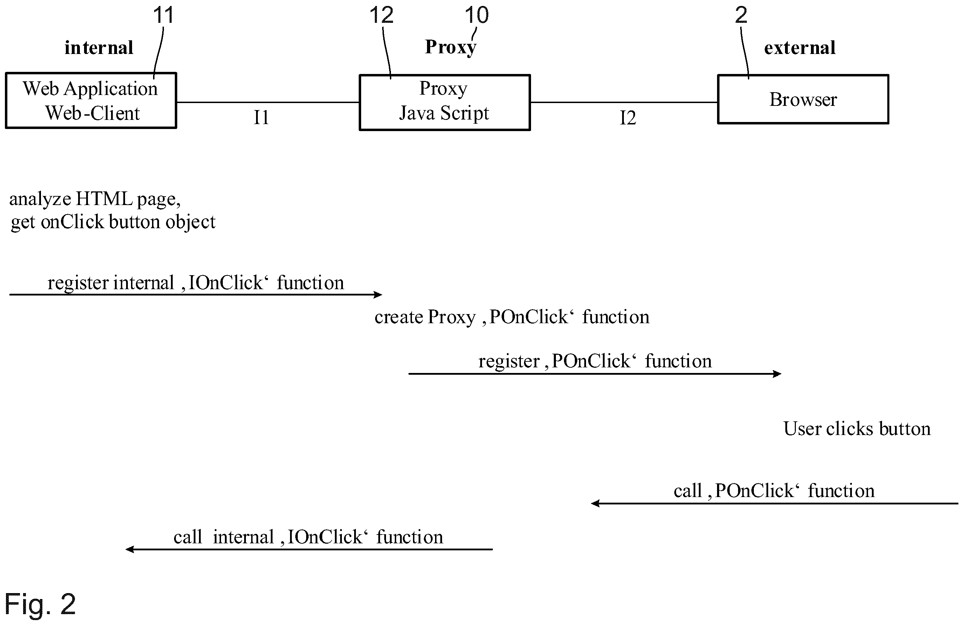

Starting with the basic prior art communication system, as it was explained above in context with Fig. 3 and 4 attention is drawn to the structures and functions according to the invention as they are shown in Fig. 1 and 2. Accordingly a special JavaScript program called proxy layer module 10 as part of this invention, is downloaded from the SSL-VPN-gateway 3 by the user's web browser 2. This can analyze and change JavaScript code of the web application 11, which is also downloaded from the SSL-VPN-gateway 3 and originates from a web server 4 shown in Fig. 1. This proxy layer module 10 code defines proxy functions, which are executed in the JavaScript engine of the user's web browser. These proxy functions contain certain JavaScript instructions, which are needed for the desired functionality of this invention.

Using built in functions, defined by ECMAScript5 or later, it is possible to create the object rebuilding proxy functionality, implemented within the proxy layer module 10. This has the advantage that the portal server of the SSL-VPN-gateway 3 does not need to do all the excessive JavaScript rewriting. The SSL-VPN-gateway 3 in most cases forwards all the data coming from the web server 4 in the Enterprise network 6 to the web browser 2 running on the user computer 1, as shown in Fig. 1. The portal server 5 needs to do at least some modifications to the JavaScript code, because normally the browser would immediately start and run the JavaScript code when it is completely downloaded.

One way of preventing direct execution would be that the portal server 5 encapsulates the original JavaScript code, for example building a base64 encoded JavaScript string, or any other encoding. Here, the proxy layer module 10 decodes, analyzes and manipulates the code before passing it to the execution environment.

This way, by doing the rewriting of the JavaScript code of the web application 11 in the web browser 2, instead of doing it in the portal server 5 of the SSL-VPN-gateway 3, there is more processor power available for high performance rates through the SSL-VPN-gateway 3, while user specific tasks are moved to be done at the user computer 1.

The herein used term "*relevant*" will further on be applied on all original browser objects, which need to be observed and covered by the proxy layer module10. The identification of these objects being relevant or not is preferably done in a way where forehand all objects are marked as relevant, excluding those which are contained in a whitelist. This whitelist contains objects, which do not have properties calling APIs of interest.

These are mostly so called low level objects having predefined prototypes, which are defined by the ECMAScript specification, like Object, String, Number, and Function.

Prior to forwarding the HTML data, coming from enterprise internal web servers, to the user computer 1, still some special information is added by the portal server 5. Only small changes are necessary to alter the relevant entry point names of references in the global scope provided by the web browser 2. This targets merely the "window" field and includes the automatic resolution of fields in the global context of the JavaScript code.

Instead of encoding the original JavaScript code in base64, the portal server 5 can also rewrite the original JavaScript code in the same manner it is done in the web browser 2 (see description below). This rewritten JavaScript code is called "inner JavaScript code" in the following. The execution environment that runs this inner JavaScript code is called "sandbox" in the following.

Implementations are free to choose, which parts of parsing, analyzing and changing of the original JavaScript code are done in the web browser 2 and which parts are done in the portal server 5, depending on requirements like good compression or needing less resources when the client (user computer 1) is equipped with little computing power. Also there can be overlapped processing, that during the time the client processes one piece of JavaScript code, the Proxy server already processes the next piece of JavaScript code. The browsers we know today are limited so that only one piece of JavaScript code can be executed at the same time. Multiple JavaScript files referenced by a certain web page are executed in a sequential way in the web browser 2, as they are listed. Modern browser are downloading resources like JavaScript files in parallel to improve processing speed of preparing a web page for rendering. Consequently, the portal server 5 can do multiple rewrites for one web page in parallel. Browser based rewriting is necessary for the JavaScript command "eval" and for DOM script tags. For example in the browser there can be JavaScript code which is disabled through the condition 'if (false)' and another JavaScript code removes the 'if (false)', so that this piece of JavaScript code is now enabled.

The portal server 5 could also store the pieces of JavaScript code after rewriting in a so called cache. This saves resources since when many users use the same JavaScript code, this needs to be rewritten only once.

The result of the rewritten JavaScript code, which the JavaScript engine in the web browser 2 will execute, is defined by the requirement to work as desired. The program flow of the rewritten JavaScript code of the web application must be the same as that of the original code. To reach this result of the JavaScript code there are multiple ways, in which the parts processed in the browser 2 and in the Proxy server differ. This can also mean that the data downloaded from the portal server 5 to the web browser 2 is not pure JavaScript code, but manipulated.

The GUI of a web page is represented by a so called DOM tree, which contains all the elements which are seen by the user. DOM tree entries, which are added by the HTML rewriting, should be hidden from the user and from the inner JavaScript code, which is the original JavaScript code rewritten for the "sandbox".

Some JavaScript code interfaces provide the functionality of obtaining the source code of a function or a DOM script tag. Here it is needed that the "sandbox" environment returns the original source code to avoid an undefined behavior. One possibility is that rewritten JavaScript code is reversible. This means that there is a unique way for the proxy layer to exactly reconstruct the original code. Another possibility is to store the original JavaScript source code in a hidden context, so that it can be returned on request. It is to be noted that the returned JavaScript code is exactly the same as when no portal server and JavaScript rewriting would be used. When the DOM tree of the HTML web page contains elements, like URLs, the inner JavaScript code running in the "sandbox" environment accesses these elements and must get exactly the same results as if the DOM tree would have been created without a portal server in between. So elements in the DOM tree of the HTML web page, which are added by the proxy layer (JavaScript code) or portal server, are not allowed to be seen or accessible by the inner JavaScript code. This needs to be ensured so that the inner JavaScript code executes exactly like without a portal server 5 in between.

By means of establishing this new runtime environment, implemented in the proxy layer module 10, the JavaScript code of the web application is running in a virtualized environment, as if it would run locally inside the enterprise network, downloaded directly from the web server, without the Internet, SSL/TLS and the SSL-VPN-gateway in between.

Documents about the functionality of Java Script may be found at http://www.ecma-international.org.

A preferred implementation is based on ECMAScript 5 functionality, which is well documented at
http://www.ecma-international.org/ecma-262/5.1/, "15.2.3 Properties of the Object Constructor".

### Example 1:

The original code:

```
var µrl = http://example.com;
                var a = window;
                a.open(url);
```

will be altered to:

```
var url = http://example.com;
                var a = ProxyLayer_window;
                a.open(url);
```

As can be seen in this example, "window" was rewritten to "ProxyLayer_window". This "ProxyLayer_window" is the reference to the Proxy object emplaced by the "sandbox", which controls the original "window" object.

The proxy object provides properties, which are constructed from the original object, adding the intervention layer of the "sandbox". This intervention layer ensures that browser objects passed to the inner code are wrapped into proxy objects. Proxy objects passed to the browser code are unwrapped to their original counterpart, before the browser code (native functions) is called. Using the limited techniques of ECMAScript 5 only, all proxy properties need to be constructed immediately when this proxy object is created. This may result in additionally needed processing power, if browser objects contain a lot of properties. A proxy object based on ECMAScript 5 techniques is called ES5-proxy in the following.

Since some web browser also support ECMAScript 6, where the related functionality is well documented at
http://www.ecma-international.org/ecma-262/6.0/,
chapter 9.5 "Proxy Object Internal Methods and Internal Slots", it is possible to use a more advanced technique. Using this ECMAScript 6 proxy (ES6-proxy) it is not needed to construct all properties immediately at creation time, but on the fly at that time when it is needed. This results in a less needed processing power during construction, if only a few of these properties are really used by the inner code, because a lot of properties do not need to be constructed at all.

It must be noted that, on the other hand, the needed processing power for using a particular property of an ES6-proxy is significantly higher than using an ES5-proxy.

The construction of the ES5-proxy is mainly based on the following functions:
- Object.defineProperty,
- Object.getOwnPropertyDescriptor,
- Object.getOwnPropertyNames,
- Object.create,
- Object.getPrototypeOf.

The construction of the ES6-proxy is mainly based on the following functions:
- Reflect.defineProperty,
- Reflect.getOwnPropertyDescriptor,
- Reflect.getOwnPropertyNames,
- Object.create,
- Reflect.getPrototypeOf,
- Proxy,
- Proxy.handler.get,
- Proxy.handler.set,
- Proxy.handler.has,
- Proxy.handler.ownKeys,
- Proxy.handler.getOwnPropertyDescriptor,
- Proxy.handler.defineProperty.

The browser interface provides only a few objects and methods (global variables, global functions) to a JavaScript application, described in the browser JavaScript run-time environment documentation. This is an important aspect for the present invention to be working in a practical way, because it is desired to substitute all relevant browser objects by own Proxy objects, to establish the "sandbox".

A preferred implementation checks, which ECMAScript version and functionality is available at the web browser where it is running, and uses the best suited functionality.

The following applies to an ECMAScript 5 supporting web browser and describes the implementation of the proxy layer, which represents the main part of this invention.

The proxy layer code is provided by a separate JavaScript module, embedded in every web page downloaded from the integrated web server/portal server 5 of the SSL-VPN-gateway 3, according to Fig. 1. This module is the first referenced JavaScript code within the page.

This proxy layer module 10 establishes the proxy layer 12 by covering all original browser objects in a way so that they can no longer be accessed directly by a web application 11 (web client). The proxy layer 12 works as intermediate proxy, interceding between the web application 11 and the web browser 2, and vice versa. At the interface 11 the web application 11 recognizes the proxy layer 12 as the browser 2, while at interface 12 the web browser 2 recognizes the proxy layer 12 as the web application 11. From the perspective of the proxy layer 12, the web application code is called "internal", while the browser side is called "external", when communicating over the interfaces I1 and 12, respectively. Accordingly the internal web application code runs in a so called "sandbox".

In a preferred embodiment, this is achieved by renaming all relevant references within the global scope, according to the above Example 1, where "window" is renamed to "ProxyLayer_window". The global scope is the complete JavaScript environment predefined by the browser to provide the standard API functions, documented by the HTML standard document (html-standard.pdf) chapter 7.3 "The Window object".

Generally, it is desired to control all relevant interfaces between the web application 11 running in the browser 2 (web client) and the web browser 2 itself. The web application 11, finally running as "inner JavaScript code", must be rewritten before it is executed by the web browser 2. This rewriting is achieved either by the portal server 5 of the SSL-VPN-gateway 3, or by the proxy layer module 10.

This way it is ensured that the web application 11 recognizes the proxy layer 12 as its runtime environment, which else would be the web browser 2 itself. The proxy layer 12 is now in place to do necessary data manipulations before forwarding the calls to the web browser 2, and vice versa, for example, changing the URL string of a window.open function call, according to Example 1. In the opposite direction the web browser 2 must not call inner code directly, due to registered callback functions. When this callback function is registered by the inner code, the proxy layer 12 wraps this callback function into a proxy function before passing it to the web browser 2. Whenever the web browser 2 calls this callback, it first calls the related function within the proxy layer module 10. This function ensures that native browser objects are wrapped into proxy objects and inner code objects are unwrapped before the original callback function of the inner code is called, according to Example 3.1, further down in this document.

The following describes the preferred preprocessing operations of this invention, which are mainly running in the portal server 5, according to Fig. 1.

After the user has logged in to the SSL-VPN-gateway 3, which is working as enterprise web portal server 5, an HTML welcome page is downloaded to the web browser 2, which provides a number of Links (URLs) to the user computer 1, addressing resources. These resources may be located locally on the web portal 5, or on other servers, normally inside the enterprise network.
Example: http://server1.internal/page1.htm

The following refers to the scenario where all addressed resources, which are requested by the web browser 2 via HTTP, are located on servers which are located in the enterprise network 6, according to Fig.1 or 3. All these resources should be downloaded to the web browser 2 via the portal server 5. To ensure this, such a link, which is provided in that welcome page, is already prepared in a way so that it addresses the web portal 5 (SSL-VPN-gateway 3) forehand.

Example: https://ssl-gateway.firm.com/wsg/http://server1.internal/page1.htm

The browser is induced to establish an SSL connection to the portal server (Example: ssl-gateway.firm.com) and sending an HTTP GET request to that portal server containing that URL, which is built of three components:
- Address of the SSL-VPN-gateway 3 (ssl-gateway.firm.com);
- The path "/wsg", indicating that the following string is not a normal resource, but a complete other URL addressing another internal web server.
- The URL addressing that internal web server (http://server1.internal/page1.htm).

When the user clicks such a link in the welcome page, the following procedures are processed, according to Fig. 4.
- The portal server 5 receives (step 1) and analyzes this HTTP GET request, checking for related content. The following applies to the situation that this path starts with sub-path "/wsg". The portal server 5, receiving the HTTP GET request, parses the URL data, extracting protocol, hostname, path and query.
- The portal server 5 uses that URL (hostname in the enterprise network) and sends (step 2) that HTTP GET request to that enterprise server, waiting for a response.

Example: http://server1.internal/page1.htm
- The response received (step 3) from the remote server is analyzed. Before forwarding (step 4) the HTML data to the web browser 2, the following changes are done:
   References, indicated by 'href attributes, are extended by the prefixed path ("/wsg/").
Example:

```
<a href="http://server1.internal/image.gif">link text</a>
```

is changed to

```
<a href="/wsg/http://server1.internal/image.gif">link text</a>
```

The proxy layer module 10 is inserted at the HTML-Head position.
Example:

```
<html><head></head></html>
```

is changed to

```
       <html><head><script
 src="/protected/wsg/proxy.js"></script></head></html>
```

where 'proxy.js' contains the proxy layer module 10 (Java Script code) of this invention, while '/protected/wsg/' specifies the path in the Integrated web server.

If HTML tags like 'script' and HTML attributes like 'href, 'src', 'script' or 'onclick' are found, then the additional parameter 'proxy_type' is added accordingly, denoting the scope of use for this resource.

The following examples refer to the static HTML rewriting done by the portal server.
Example 2.1:

```
        <script src="script1.js"></script>
```

is changed to

```
<script src="script1.js?proxy_type=js, charset=UTF8"></script>
```

Example 2.2:

```
<script>console.log("hello world");</script>
```

is changed to

```
<script>ProxyLayer.m_parse_script(this,
        "Y29uc29sZS5sb2colmhlbGxvlHdvcmxklik7");</script>
```

containing the original JavaScript code Base-64 encoded
Example 2.3:

```
        <button onclick="console.log('hello world')">Click me</button>
```

is changed to

```
        <button onclick="ProxyLayer.m_parse_script(this,
        'Y29uc29sZS5sb2coJ2hlbGxvlHdvcmxkJyk=')">Click me</button>
```

Example 2.4:

```
        <a href="javascript:console.log('hello world')">link text</a>
```

is changed to

```
        <a href="javascript:ProxyLayer.m_parse_script(this,
        'Y29uc29sZS5sb2coJ2hlbGxvlHdvcmxkJyk=')">link text</a>
```

It is to be noted that the Java Script function 'ProxyLayer.m_parse_script' is contained in the downloaded proxy layer module 10 'proxy.js'.
• In the web browser 2, when all needed resources are loaded, initialization takes place. Here, the proxy layer module code is executed first, and defines the function, which is used later on to parse and analyze all the other web application related Java Script code, performing all needed modifications so that the web application 11 will further on use and call the proxy layer intermediate code (interface I1) instead of the web browser code (12), according to Fig. 1.
• Executing the function "ProxyLayer.m_parse_script" by the web browser 2 performs:
   - Decoding of the Base64 encoded original source code of the web application 11,
   - analyzing that source code by a JavaScript parser,
   - modifying the analyzed and parsed source code,
   in order to create modified application JavaScript code.
• The modified application JavaScript code is executed by the web browser 2 due to evaluation, either by the Java Script command "eval" or by using a DOM script tag.

It is to be noted, that in case of the rewriting is done by the portal server 5 in the SSL-VPN-gateway 3, that the code entry points in the above mentioned examples will look different. The final result, which is executed by the web browser 2, may be the same as if it is created by the function "ProxyLayer.m_parse_script" of the proxy layer module, as shown in the above Examples 2.1 to 2.4, according to the following Example 2.5:
Example 2.5:

```
 <script>console.log("hello world");</script>
```

is changed to

```
 <script>ProxyLayer_console.log("hello world");</script>
```

When running the proxy layer module 10, there are three methods available, which can be used to establish the proxy layer functionality. Which of these methods is used depends on the prototype of the relevant object. This prototype can be used to identify one of the public interfaces as defined by the HTML standard.

The ECMAScript function "Object.getOwnPropertyNames" is used to obtain all properties of an object.

The ECMAScript function "Object.getOwnPropertyDescriptor" is used to obtain the property descriptor (DESC) of such a property.

For the first three methods, one of the following four Processing Procedures (P1 to P4) can be applied on original objects, given the previously obtained property descriptor (DESC) and the property name (NAME) of the original object (OBJ).

### P1:

The property of an object stays unchanged.

### P2:

If the original property descriptor meets the requirements of "IsDataDescriptor" in ECMAScript, then an AccessorDescriptor (DESC2), consisting of 'Getter' function (A1) and 'Setter' function (A2), is created to be able to get and set property values using "Reflect.get" and "Reflect.set". The original object (OBJ) and the property name (NAME) are being stored into a "hidden context" within the scope of the functions A1 and A2 in DESC2.

If the original property descriptor meets the requirements of "IsAccessorDescriptor" in ECMAScript then it is used unchanged as under the name DESC2.

A 'Getter' and a 'Setter' function (B1, B2) is created by the proxy layer for 'internal' and 'external' wrap operations. These functions are able to convert incoming objects from 'external' into proxy layer objects and pass these to 'internal'. Vice versa, incoming objects from 'internal' are unwrapped and the so retrieved original (browser) object is passed to 'external'. This is one of the most important and frequently applied procedures. No 'Setter' function is created if the original property descriptor lacks a "Setter" function.

The property descriptor (DESC2) is being stored into a "hidden context" within the scope of the functions B1 and B2.

When the 'Getter' function (B1) for 'internal' is called, then this property descriptor (DESC2) is used with the unwrapped 'this' object to obtain the original value to be rewrapped for 'internal' usage and returned. When the 'Setter' function (B2) for 'internal' is called, then this property descriptor (DESC2) is used with the unwrapped 'this' object to set the rewrapped original value for 'external' usage by the browser.

In the opposite direction the following is applied:
When the 'Getter' function (B1) is called from 'external', then this property descriptor (DESC2) is used with the unwrapped 'this' object to obtain the original value to be rewrapped for 'external' usage and returned. When the 'Setter' function (B2) is called from 'external', then this property descriptor (DESC2) is used with the unwrapped 'this' object to set the rewrapped original value for 'internal' usage by inner code.

Hereby, a so called 'CallerContext' is used to identify 'internal' and 'external' calling states. The 'CallerContext' indicates whether a proxy layer function is called by the browser or by the inner JavaScript code. The 'CallerContext' results automatically from having separate implementations of proxy layer functions for proxy layer objects passed to the browser or to the inner code. A state variable can be used to mark the context switch from proxy layer to browser and from browser to proxy layer calls.

### P3:

The type of the original object and the property name denotes a public browser API, that requires a distinct handler for additional data manipulation, such as modifying URLs. For further details see the general explanation about portal server related manipulations later in this document.

If the public browser API denotes a function, then a property descriptor (DESC3) of type "DataDescriptor" is created using the distinct handler. This descriptor (DESC3) is used to define the property within the proxy object.

If the public browser API denotes a property, then the processing is the same as in P2, but the original property descriptor (DESC) is replaced by new one, that uses a distinct 'Getter' function within the proxy layer. It also defines a distinct 'Setter' function within the proxy layer, if available.

### P4:

Some JavaScript objects are set up by the JavaScript engine during runtime, which cannot be wrapped into proxy layer objects, because it cannot be controlled by the proxy layer module. This applies mainly to the "arguments" object, which is created on the fly by the JavaScript engine during every function call. Whenever an inner code function makes use of this "arguments" object, one of the following procedures (A or B) may be applied:
A) The related property 'look up' of the relevant property "caller" is then rewritten as follows:
   Example:

   ```
"var caller = arguments.caller;"
```

   will be changed (static rewriting) to

   ```
"var caller = ProxyLayer.m_get_caller(arguments);
```

   The related property 'set' to the relevant property "caller" is then rewritten as follows:
   Example:

   ```
"arguments.caller = null;"
```

   will be changed to

   ```
"ProxyLayer.m_set_caller(arguments, null);".
```
B) A function call using the relevant property "caller" is substituted by a function wrapper.
   Example 1:

   ```
"var x = arguments.caller('example');"
```

   will be changed to

   ```
"var x = ProxyLayer.m_sub_call_caller(arguments, 'example');".
```

The following methods are applied in ECMAScript 5 mode, applying the related mentioned procedures.

### Method 1, primarily used whenever possible:

Here, the original browser object is completely wrapped into a proxy layer object and this way no longer directly accessible by the web application 11. The proxy layer code reads and analyzes all original browser object properties by the functions "Object.getOwnPropertyNames" and "Object.getOwnPropertyDescriptor", creates anew object, which is called Proxy object, and defines all properties by the function "Object.defineProperty" accordingly. As an attribute of the function "Object.defineProperty", a so called 'Getter' and a 'Setter' function is created. These functions are called whenever the proxy layer object properties are read or written from 'external' or 'internal', accordingly. They are able to convert incoming objects from 'external' and forward them to 'internal'. Vice versa, incoming wrapped browser objects from 'internal' are unwrapped and forwarded to 'external'. Incoming wrapped internal objects from internal are wrapped into a proxy layer object before forwarded to external.
This is done according to the described procedure P2.

### Method 2:

The original browser object is only partly modified, but not wrapped like in method 1. It is not at all wrapped into a proxy layer object. Some data types, like "object", "string" or "function" are members of the programming language JavaScript and as such not relevant for the given SSL-VPN-gateway scenario, because these do not belong to the controlled API layer. Merely some functions, which allow inspection of the proxy layer, must be changed accordingly by a substitution of proxy layer functions. This method cannot be used if one of the relevant properties is marked as non-configurable. This can either be achieved by the method "freeze" or "seal", or may be preset by the browser environment.

For non-relevant properties in the above mentioned sense, procedure P1 is applied. For relevant properties in the above mentioned sense, where values are not manipulated, procedure P2 is applied. For relevant properties in the above mentioned sense, where values are manipulated, procedure P3 is applied.

### Method 3:

The original browser object is neither wrapped nor modified, but the state of the art method is utilized. This method is applied only, if methods 1 and 2 cannot be applied.

For not relevant properties in the above mentioned sense, procedure P1 is applied. For relevant properties in the above mentioned sense, which are not function calls, procedure P4A is applied. For relevant properties in the above mentioned sense, which are function calls, procedure P4B is applied.

It must be noted that these operations affect the rewriting of the inner code, not modifying objects as in methods 1 and 2.

### Method 4:

For relevant properties in the global context an alternative entry point is generated. Relevant are all properties that are predefined by the browser environment. This new reference provides the same value as if the property would be read through the proxy-object of window. As above, code rewriting is used to provide the needed functionality.
For example:

```
"var loc = document.location;"
```

will be changed (static rewriting) to

```
"var loc = ProxyLayer_document.location;"
```

```
"ProxyLayer_document" is equal to "ProxyLayer_window.document";
```

It must be noted that some JavaScript functions appear as regular, but they have a special built in behavior such as "eval". The code passed to the "eval" function is executed in the same context as the call to the "eval" function. Thus it is not possible to replace the original "eval" function by a proxy layer function. Else the evaluated code would use the context of the proxy layer function.

Whenever inner code makes use of a function call to "eval" object, the following procedure may be applied:
Example 1:

```
  "eval("a = 0");"
```

will be changed to

```
  "eval(ProxyLayer.m_rewrite_eval(eval, "a = 0"));".
```

If the "eval" function is used indirectly by invoking it via a reference other than "eval", as of ECMAScript 5, it works at global scope rather than local scope.

Whenever inner code makes use of indirect "eval", the following procedure may be applied:
Example 2:

```
  "var x = eval;"
```

will be changed to

```
  "var x = ProxyLayer.m_eval(eval);".
```

These four methods provide the basis for all portal server related manipulations. Such manipulations comprise changing of URLs, URIs, and the DOM tree of a web page. In doing so, knowledge about APIs provided by the browser runtime environment is necessary, as shown by the following example of a URL manipulation:
An example of observing the function "window.open(url, target, features)" by the proxy layer in order to manipulate data passed in the direction from the inner web application code to the external browser:
   The call of function "window.open" by the JavaScript web application (inner code) looks as follows:
      window1.open(http://server1.internal/page1.htm);

The variable "window1" is a proxy layer object and provides a proxy layer function in the property "open" through a registered Getter function.

This Getter function returns a proxy layer function for the native browser function "open". This returned function is then called and unwraps the "this" object to the browser "window" object and all passed arguments into their browser counterparts.

Then the proxy layer function calls the API specific function for window.open defined within the proxy layer. This function modifies the parameter "url" for the portal server implementation of this invention.

The URL http://server1.internal/page1.htm is changed to

### https://ssl-gateway.firm.com/wsg/http://server1.internal/page1.htm

Now the native function "window.open" is called with the modified parameters.

Example of observing the property "Location.href" by the proxy layer 12 in order to manipulate data passed in the direction from the external web browser 2 to the inner web application code:
var URL = document1.location.href;

The variable "document1" is a proxy layer object and provides a proxy layer getter function (A) in property "location". This getter function (A) is called due to "document1.location" and returns a wrapped proxy layer object of type "Location".

This proxy layer object of type "Location" provides a proxy layer getter function (B) for the property "href". This function unwraps the "this" object to the native browser "location" object.

Then it calls the API specific getter function (C) for "Location.href" with the native browser location object as "this" object (defined within the proxy layer).

The function gets the property "href" by using the "this" object and modifies the result as follows:
https://ssl-gateway.firm.com/wsg/http://server1.internal/page1.htm is changed to
http://server1.internal/page1.htm

This changed value is returned by the getter function (C) to function (B). Function (B) checks the type of the returned value and wraps it into a proxy layer object, if necessary. This is not the case, here, because the returned value is of type "string". The result of this operation is returned and assigned to the variable "URL".

In a preferred embodiment, the proxy layer code of this invention is injected into all HTML web pages, which are displayed (presented) to the user. All other HTML web pages are not rewritten.

Web pages are rewritten statically by injecting the proxy layer JavaScript module, by changing all necessary URLs, URIs, CSS rules and JavaScript code within that page.

The following describes a processing sample for method 1, 'onClick' function, according to Fig. 2. The downloaded HTML page contains a button, which can be clicked by the user. The web application 11 provides the function IOnClick(), which should be called by the web browser 2 whenever the user clicks on this button.

At a glance:
When the web application 11 registers the IOnClick function, it does this with the proxy, which itself creates the POnClick function, replacing the original IOnClick function, registering this POnClick function in the web browser 2. Doing this, the web browser 2 will call the proxy layer function POnClick, when the user clicks on the related button.

Here, the proxy layer code is able to do the needed manipulations, wrapping all arguments to proxy layer objects, before calling the original IOnClick function.

### Example 3.1, according to Fig. 2:

The following JavaScript code sample snippets are intended to basically demonstrate the proxy layer functionality:

```
 // web Application Code snippet:
 function IOnClick(e) {
 }
 var e = document.createElement("button");
 e.onclick = IOnClick;
 var f = e.onclick;
 assert(f=== IOnClick, "unexpected");
 // web Application code snippet (after rewrite)
 function IOnClick(e) {
 }
 // Get Proxy-Object ProxyLayer_document
 // Get createElement of Proxy-Object -> Proxy_createElement
 // Call Proxy_createElement with ProxyLayer_document as 'this'
 var e = ProxyLayer_document.createElement("button");
 // Set property "onclick" in Proxy-Object -> Proxy_set_property_onclick
 e.onclick = IOnClick;
 // Get property "onclick" in Proxy-Object -> Proxy_get_property_onclick
 var f = e.onclick;
 assert(f=== IOnClick, "unexpected");
 // proxy layer implementation for evaluated result of expression
 // "ProxyLayer_document.createElement":
 function Proxy_createElement(elementName){
        var realDocument = Proxy_unwrap_for_extern(this);
        var realElementName = Proxy_unwrap_for_extern(elementName);
        var realResult = realDocument.createElement(realElementName);
        return Proxy_wrap_for_intern(realResult);
        }
        // proxy layer implementation for evaluation of expression "e.onclick = IOnClick":
        function Proxy_set_property_onclick(newValue){
        var realObject = Proxy_unwrap_for_extern(this);
        // Proxy_wrap generates so called "POnClick"
        var proxyNewValue = Proxy_wrap_for_extern(newValue);
        realObject.onclick = proxyNewValue;
        return newValue;
        }
        // proxy layer implementation for evaluation of expression "e.onclick":
        function Proxy_get_property_onclick(){
        var realObject = Proxy_unwrap_for_extern(this);
        // Proxy_wrap generates so called "POnClick"
        var realValue = realObject.onclick;
        var internValue = Proxy_unwrap_for_intern(realValue);
        return internValue;
        }
        function Proxy_wrap_for_intern(realObject) {
        // Checking for important types (e.g. DOM-Objects)
        // to manipulate/change values for SSL-VPN-gateway
        // Use special handlers for such cases.
        return new Proxy(realObject, ...);
        }
        function Proxy_wrap_for_extern(realObject) {
        // Used to convert or wrap all external objects
        return new Proxy(realObject, ...);
        }
        function Proxy_unwrap_for_extern(proxyObject){
        // Extracts external object from proxy object
        return realObject;
        }
        function Proxy_unwrap_for_intern(proxyObject) {
        // Extracts internal object from proxy object
        return realObject;
        }
```

Implementations should take some differences between ECMAScript 5 and 6 into consideration, because these differences influence the way how the proxy is implemented, as follows:
There exist web browser objects (i.e. DOM objects) which can dynamically change the available properties (e.g. HTMLCollection). In ECMAScript 5 there is no direct method to get notified about the removal of a property. This problem can only be solved through using special knowledge of the related API functions for the needed checks and synchronizations (i.e. monitoring of the DOM tree for changes). This can be done, for example, through registration of a listener function (callback), which is called by the web browser in the case of changes. In that callback function the synchronization between the original object and the proxy layer object can be done.

This described problem does not exist in ECMAScript 6. Here, the original proxy objects provide functions (e.g, Get, HasProperty, see top 9.5 'Proxy Object Internal Methods and Internal Slots' of the above mentioned ECMAScript 6 documentation), which are called whenever a property is used, even if it does not exist in the original object. This way it is possible to do synchronization between an ECMAScript 5 proxy and original object 'on-the-fly'.

Implementations running in ECMAScript 6 capable web browser browsers wrap it's ECMAScript 5 proxy layer code into an ECMAScript 6 proxy object. At the beginning, when the ECMAScript 5 proxy is created, it does not contain any rebuilt properties out of the original object. Such properties are built or deleted on request, only. This saves a lot of processing power, because it is not needed to create all properties right at the beginning.

In that scenario there may arise another problem.

The original object cannot be used as ECMAScript 6 proxy target, if one of the following rules, being well documented in the above mentioned ECMAScript 6 documentation, is true:

```
 9.5.8. [[Get]] (P, Receiver),
 13. If targetDesc is not undefined, then
  If IsDataDescriptor(targetDesc) and targetDesc.[[Configurable]] is false and tar-
  getDesc.[[Writable]] is false, then
     If SameValue(trapResult, targetDesc.[[Value]]) is false, throw a TypeError excep-
     tion.
  If IsAccessorDescriptor(targetDesc) and targetDesc.[[Configurable]] is false and tar-
  getDesc.[[Get]] is undefined, then
     If trapResult is not undefined, throw a TypeError exception.
```

If none of these rules are true for all properties of an original object to be manipulated, then applying an ECMAScript 5 property environment can be avoided.

## Claims

1. Internet-based communication system including
- at least one user computer (1) running a web browser (2) and web applications (11),
- a web server (4) located in an internal enterprise network (6),
- an encrypting VPN gateway (3) connectable to the user computer (1) via the public Internet (9) and to the web server (4) via the internal enterprise network(6), said encrypting VPN gateway(3) running an integrated web portal server (5), which is adapted to be addressed by the web browser (2) providing links to webpages and web applications located on the web server (4),
**characterized by**
- a JavaScript (=JS) proxy layer module (10) implemented in the user computer (1) between the web browser(2) and web application (11) and downloaded from the VPN gateway (3) by the web browser (2), wherein the JS proxy layer module (10) defines an object rebuilding proxy functionality, the functions of which are executed in a JS engine of the web browser (2) and include analyzing and - if necessary - changing JS code of any web application (11) which is also downloaded from the VPN gateway (3) but originates from web servers not located on this same VPN gateway (3), but on other machines in the internal enterprise network (6).

2. Internet-based communication system according to claim 1, **characterized in that** said functions of the proxy functionality are implemented in the JS proxy layer module (10), using built in functions proxy layer defined by ECMAScript5, ECMAScript6 or later.

3. Internet-based communication system according to claim 1 or 2, **characterized in that** the proxy layer code for the JS proxy layer module (10) is provided by a separate JavaScript module embedded in every presentable web page being part of the same shared origin web server of the encrypting VPN-gateway (3).

4. Internet-based communication system according to at least one of the preceding claims, **characterized in that** the JS proxy layer module (10) is adapted to cover original browser objects in a way to become inaccessible directly by a web application (11) thus the web application (11) is running on a shielded sandbox technique.

5. Internet-based communication system according to claim 4, **characterized in that** the original browser objects become inaccessible directly by renaming all relevant references within the complete JavaScript environment predefined by the web browser (2) to provide standard API functions and properties.

6. Internet-based communication system according to claim 2, **characterized in that** for establishing the proxy layer functionality under ECMAScript5, ECMAScript6 or later one of the following processing procedures are applicable on original objects:
- P1: the property of an object stays unchanged;
- P2: an accessor descriptor (DESC2) consisting of a 'Getter' function (A1) and 'Setter' function (A2) is created to be able to get and set property values wherein the original object (OBJ) and the property name (NAME) being stored in a hidden context within the scope of the functions A1 and A2 in DESC2;
- P3: the type of the original object and the property name denotes a public browser API that requires a distinct handler for additional data manipulation; and
- P4: mainly in context with "arguments" objects these are set up by the JS engine during runtime, as not being wrapped into proxy layer objects, wherein whenever an inner code function makes use of this "arguments" object, one of the following procedure (A or B) is applied:
- A): the related property 'look up' and the related property 'set' of the relevant property "caller" are rewritten; or
- B): a function call using the relevant property "caller" is substituted by a function of wrapper.

7. Internet-based communication system according to claim 6, **characterized in that** the proxy layer module (10) is adapted to be run according to one of the following three methods:
- Method 1: an original browser object is completely wrapped into a proxy layer object no longer being directly accessible by the web application (11), wherein the processing procedure P2 is used;
- Method 2: an original browser object is only partly modified, but not wrapped into a proxy layer object, wherein
= for non-relevant properties procedure P1 is applied,
= for relevant properties, where values are not manipulated, procedure P2 is applied, and
= for relevant properties, where values are manipulated, procedure P3 is applied;
- Method 3: if methods 1 and 2 cannot be applied an original browser object is neither wrapped nor modified, but a state of the art method is utilized, wherein
= for not relevant properties procedure P1 is applied,
= for relevant properties procedure P4A or P4B is applied, and
- Method 4: for relevant properties in the global context an alternative entry point is generated. Relevant are all properties that are predefined by the browser environment. This new reference provides the same value as if the property would be read through the proxy-object of window.
